# EUROPÄISCHE PATENTSCHRIFT

(11) **EP 3 620 546 B1**
(45) Veröffentlichungstag und Bekanntmachung des Hinweises auf die Patenterteilung: **23.11.2022**
(21) Anmeldenummer: 19194300.0
(22) Anmeldetag: 29.08.2019
(51) Int. Cl.: C23C 4/02, C23C 4/06, C23C 4/10, C23C 4/129, C23C 24/10, C23C 28/02, C23C 28/00, F16D 65/00, F16D 65/02, F16D 65/12

(54) **BREMSSCHEIBE UND VERFAHREN ZUM HERSTELLEN EINER BREMSSCHEIBE**
BRAKE DISC AND METHOD FOR PRODUCING SAME
DISQUE DE FREIN ET PROCÉDÉ DE FABRICATION D'UN DISQUE DE FREIN

(30) Priorität: 04.09.2018 DE 102018215041; 27.08.2019 DE 102019212844
(43) Veröffentlichungstag der Anmeldung: 11.03.2020
(73) Patentinhaber: Ford Global Technologies, LLC, Dearborn, MI 48126 (US)
(72) Erfinder: Rettig, Marc, 50823 Köln (DE); Grochowicz, Jaroslaw, 45357 Essen (DE); Grabiec, Tomasz Pawel, 51427 Bergisch Gladbach (DE); Verpoort, Clemens Maria, 40789 Monheim (DE); Wank, Andreas, 57629 Luckenbach (DE); Hitzek, Alexander, 57629 Luckenbach (DE); Schmengler, Christian, 57629 Luckenbach (DE); Müller-Roden, Karin, 57629 Luckenbach (DE); Käsgen, Klaus, 42799 Leichlingen (DE)
(74) Vertreter: Markowitz, Markus

(56) Entgegenhaltungen:
- WO-A1-02/38978
- WO-A1-2014/049209
- WO-A1-2015/188918
- DE-A1-102004 016 095
- DE-A1-102006 004 156
- DE-A1-102011 089 923

## Beschreibung

Die Erfindung betrifft eine Bremsscheibe für eine Radbremse eines Landfahrzeugs, aufweisend einen aus Grauguss gebildeten Grundkörper mit wenigstens einer axialen Reibseite, wenigstens eine auf die axiale Reibseite aufgebrachte Korrosionsschutzschicht und wenigstens eine auf die Korrosionsschutzschicht aufgebrachte Verschleißschutzschicht. Des Weiteren betrifft die Erfindung ein Verfahren zum Herstellen einer Bremsscheibe für eine Radbremse eines Landfahrzeugs, wobei ein Grundkörper aus Grauguss hergestellt wird, der wenigstens eine axiale Reibseite aufweist, auf die axiale Reibseite wenigstens eine Korrosionsschutzschicht aufgebracht wird und auf die Korrosionsschutzschicht wenigstens eine Verschleißschutzschicht aufgebracht wird.

Herkömmliche Bremsscheiben für Radbremsen von Landfahrzeugen können unter Verwendung eines Sandguss-Verfahrens aus einem kostengünstigen Graugusswerkstoff hergestellt werden. Der Graugusswerkstoff kann durch Gießen und nachfolgende Dreh- bzw. Schleifbearbeitung in die gewünschte Form mit einer gewünschten Oberflächengüte im Bereich der Reibringoberfläche gebracht werden.

Aufgrund der guten Wärmeleitfähigkeit infolge von Graphitlamellen in der Gussstruktur eignet sich das Graugussmaterial zwar gut für den Einsatz zur Herstellung von Bremsscheiben, jedoch zeigt das Graugussmaterial aufgrund einer geringen Härte von etwa 200 HV bis etwa 230 HV eine nur begrenzte Verschleißbeständigkeit, besonders in Verbindung mit Bremsbelägen, die auf dem Europäischen Markt im Einsatz sind. Die Reibmaterialien von Bremsbelägen enthalten abrasive Stoffe, die stabile Reibkoeffizienten in einem weiten Temperaturbereich sichern. Nachteil ist ein erhörter Bremsscheibenverschleiß.

Auf den Märkten außerhalb von Europa verwenden Autohersteller NAO-Reibmaterialien (Non-Asbestos Organic-Reibmaterialien), die deutlich weniger Verschleiß der Bremsscheibe verursachen, wobei aber die Reibwerte nur bis etwa 400 °C stabil bleiben. Beim Bremsvorgang entstehen daher Verschleiß- und Feinstaub-Partikel. Die Feinstaubbelastung in der Luft von Innenstädten, hervorgerufen durch den Straßenverkehr, rückt immer stärker in den Fokus der Öffentlichkeit. Außerdem beschweren sich viele Fahrzeugkunden über die starke Verschmutzung teurer Aluminiumfelgen durch eingebrannten Abrieb von Scheibenbremsen.

Zudem hat ein Graugussmaterial eine sehr schlechte Korrosionsbeständigkeit. Nach nur einem Tag bei Regenwetter ist die Bremsscheibe üblicherweise rost-rot, wenn das Fahrzeug nicht bewegt wird. Erst wenn die rostige Oberfläche durch die abrasive Wirkung der Bremsbeläge beansprucht und abgetragen wird, ergibt sich eine metallisch saubere, optisch ansprechende Oberfläche. Bei Hybrid-Fahrzeugen wird aber eine solche Bremsscheibe mit rauer Rost-Rot-Oberfläche nur im Falle einer stärkeren Bremsung (> 0,3 • g (g: Fallbeschleunigung)) ausreichend mechanisch beansprucht. Dabei kann es dann zu einem Bremsen-Rubbeln und/oder zur Beschädigung des Bremsbelags und/oder zu einer unangenehmen Geräuschbildung kommen.

Daher sind sehr viele Beschichtungslösungen für Bremsscheiben vorgeschlagen worden, um die beschriebenen Nachteile zu reduzieren. Ein ferritisches NiederTemperatur-Nitrocarburierungs (FNC)-Verfahren liefert einen temporären Korrosions- und Verschleißschutz. Jedoch ist diese Schutzwirkung bereits nach etwa 10.000 km verschwunden, sobald die dünne Nitrierzone von nur 10 µm Dicke durch Abrasion abgetragen worden ist. Besonders bei sehr abrasiv wirkenden Belägen gemäß einer ECE-Norm wird die Beschichtung sehr schnell entfernt. Trotzdem kann so ein temporärer Schutz zu moderaten Kosten außerhalb von Europa bei Verwendung von NAO-Belägen von Interesse sein. Stehen nämlich Neufahrzeuge beim Händler für einige Tage draußen im Regenwetter, so würde ein Kurzzeit-Korrosionsschutz beim Kunden eines Fahrzeugs mit teuren Alufelgen einen optisch besseren Eindruck hinterlassen, auch wenn der Effekt dann nach einigen Wochen/Monaten verschwunden sein sollte.

Des Weiteren ist eine PSCB ( = Porsche Surface Coated Brake)-Bremsscheibe mit einer chemischen Nickel-Korrosionsbarriere und einer unter Verwendung eines Hochgeschwindigkeits-Flammspritzverfahrens (HVOF-Verfahren) gebildeten WC-Cr₃C₂-Ni-Deckschicht auf den Markt gekommen, die zu einer 90%igen Reduktion von Feinstaubemissionen führen soll. Diese sehr teure Hartmetall-Beschichtung lässt sich aber nicht weltweit für alle Bremsscheiben auftragen, weil das strategisch wichtige WC-Material nicht in ausreichenden Mengen verfügbar ist.

Die aus der DE 10 2004 016 095 A1 bekannte Bremsscheibe besteht aus einem aus Grauguss hergestellten Grundkörper, der auf wenigstens einer Seite teilweise mit einer Korrosionsschutzschicht überzogen ist, die ihrerseits eine Verschleißschutzschicht trägt. Die Korrosionsschutzschicht kann aus einer Nickellegierung, beispielsweise einer NiCrAl-Legierung bestehen, soll eine Diffusion von Feuchtigkeit verhindern und darüber hinaus haftvermittelnde Eigenschaften aufweisen.

Die aus der DE 10 2011 089 923 A1 bekannte Bremsscheibe entspricht in ihrem Aufbau im Wesentlichen derjenigen gemäß der DE 10 2004 016 095 A1. Ein aus Grauguss hergestellter Grundkörper trägt auf wenigstens einer Seite eine Korrosionsschutzschicht, auf der eine Verschleißschutzschicht aufgetragen ist. Die kalt aufgebrachte Korrosionsschutzschicht besteht aus einer Ni, Cu und/oder Cr enthaltenden Metalllegierung und soll zusätzlich einer Minderung von Spannungen dienen, die sich aus einer Abkühlung aufgrund unterschiedlicher thermischer Ausdehnungskoeffizienten des Werkstoffs des Grundkörpers und desjenigen der Verschleißschutzschicht ergeben.

Aus der DE 10 2006 004 156 A1 ist eine weitere Bremsscheibe bekannt, bei der eine Verschleißschutzschicht, welche aus einem Ni-, Cr-, oder auch Mo-haltigen Stahl, somit einem zumindest nichtrostenden Stahl besteht, auf einen, aus Grauguss bestehenden Grundkörper aufgetragen ist. Es sind eine Reihe von Eisenwerkstoffen offenbart, für welche die Legierungszusammensetzung für die Verschleißschutzschicht angegeben ist.

Die WO 2014 049 209 A1 betrifft einen austenitischen rostfreien Stahl der eine verbesserte Lochfraßkorrosionsbeständigkeit und verbesserte Festigkeit aufweisen soll. Der rostfreie Stahl enthält in Gewichtsprozent weniger als 0,03 % Kohlenstoff (C), 0,2 - 0,6 % Silizium (Si), 1,0 - 2,0 % Mangan (Mn), 19,0 - 21,0 % Chrom (Cr), 7,5 - 9,5 % Nickel (Ni), 0,4 - 1,4 % Molybdän (Mo), weniger als 1,0 % Kupfer (Cu), 0,10 - 0,25 % Stickstoff (N), gegebenenfalls weniger als 1,0 % Kobalt (Co), gegebenenfalls weniger als 0,006 % Bor (B), und der Rest sind Eisen (Fe) und unvermeidliche Verunreinigungen.

Die DE 10 2014 006 064 A1 offenbart eine Grauguss-Bremsscheibe, bei der verschiedene Schichtsysteme für den Korrosions- und für den Verschleißschutz zum Einsatz kommen. Hierbei wird in einen Reibring zunächst eine feine Nut mit Hinterschnitt eingebracht, um eine gute Verklammerung der später aufgebrachten thermischen Spritzbeschichtung zu erhalten. Zunächst wird dann eine weiche NiCr-Plasmaspritzschicht aufgetragen, die mögliche Risse an der harten Deckschicht stoppen soll. Damit aber auch der notwendige Korrosionsschutz gegeben ist und eine Unterkorrosion der Verschleißbeschichtung vermieden werden kann, werden die Graugussscheiben nach dem Einbringen der Verklammerungsnuten ein- oder zweifach einer Nitrier- und Oxidier-Randschichtbehandlung unterzogen. Anschließend werden dann die Haft- und Verschleißschutzschicht durch thermisches Spritzen aufgetragen.

Weiterhin wurden Korrosionsschutzschichten durch ein Plasma-Pulver-Auftragschweißverfahren oder ein Laserauftragsschweißverfahren aufgetragen. Hierbei stellt sich aber heraus, dass die Graphitlamellen im Graugussmaterial der Bremsscheiben bei der Herstellung einer dichten Anbindungszone störend wirken. In der DE 10 2010 048 075 B4 werden hinsichtlich einer Optimierung der Haftung und einer Reduzierung von Unterkorrosion an Graugussbremsscheiben mit thermisch gespritzten Verschleißschutzschichten durch Vermeiden des Zutritts korrosiver Medien zu Grafitlamellen verschiedene Verfahren aufgeführt, die eine von Grafitlamellen befreite Oberfläche von Graugussbremsscheiben ermöglichen.

Die DE 10 2010 052 735 A1 betrifft eine Bremsscheibe mit einem Bremsscheibengrundkörper mit zumindest einer Reibringoberfläche, die mit einer thermischen Spritzschicht beschichtet ist. Über die Reibringoberfläche erstreckt sich zumindest eine Vertiefungslinie, die zumindest an einer in Bezug auf ihre Basis vertikalen Wandung einen Hinterschnitt aufweist, wobei die hinterschnittene Vertiefungslinie einen Haftgrund für die thermische Spritzschicht bereitstellt.

Die DE 10 2012 022 775 A1 betrifft eine korrosionsgeschützte Verbundbremsscheibe, die einen Bremsscheibentopf und einen Reibring aufweist, die mittels einer Verzahnung gefügt sind. Die Verzahnung des Reibrings ist mit einem Zink-Staublack beschichtet und die Verzahnung des Bremsscheibentopfs ist mit einer Zink-Nickel Beschichtung beschichtet.

Die JP 2005 239 115 A offenbart einen Bremsrotor mit einer durch Feuerverzinken hergestellten Rostschutzbeschichtung auf einer Außenfläche eines Befestigungsflansches, der eine Befestigungsfläche des Bremsrotors ist.

Die JP 2009 168 162 A offenbart einen Scheibenbremsrotor mit einer Reibfläche, die mit einem Phosphatfilm beschichtet ist und einer Oberflächenbehandlung mit starkem Alkali unterzogen wird, so dass eine Zinkverbindung auf der Reibfläche gegeben ist.

Der Erfindung liegt die Aufgabe zugrunde, eine kostengünstige Beschichtung für eine Bremsscheibe bereitzustellen, die eine verbesserte Korrosions- und Verschleißbeständigkeit für Reibflächen von Bremsscheiben mit einem Grundkörper aus Grauguss ermöglicht.

Erfindungsgemäß wird die Aufgabe durch eine Bremsscheibe mit den Merkmalen des Anspruchs 1 gelöst, deren Korrosionsschutzschicht auf Eisenbasis aus einem nichtrostenden und säurebeständigen Stahl mit einem Borgehalt von max. 0,01 Gew.-%, einem maximalen Nickelgehalt von 0,1 Gew.-%, einem maximalen Kupfergehalt und/oder einem maximalen Kobaltgehalt und/oder einem maximalen Wolframgehalt von 0,1 Gew.-% - hergestellt ist, und eine Karbidverstärkung aufweist.

Es ist darauf hinzuweisen, dass die in der nachfolgenden Beschreibung einzeln aufgeführten Merkmale sowie Maßnahmen in beliebiger technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß ist die Korrosionsschutzschicht aus einem nichtrostenden und säurebeständigen Stahlhergestellt. Dieser soll im Rahmen der Erfindung insbesondere ein RSH-Stahl (Rost- Säure- Hitzebeständig) mit spezieller Reinheit in Bezug auf das Element Bor sein, dessen Gefüge aus Austenit, Ferrit oder einer Mischung von Austenit und Ferrit besteht. Ein solcher Stahl ermöglicht die Herstellung der Korrosionsschutzschicht ohne Fehlstellen auch auf einem Grundkörper aus Grauguss mit Graphitlamellen an der Oberfläche bzw. axialen Reibseite des Grundkörpers, insbesondere auch bei Verwendung eines Laserauftragschweißverfahrens mit einer Oberflächengeschwindigkeit von mehr als 10 m/min (Hochgeschwindigkeits-Laserauftragschweißen), wie dies gemäß der Erfindung vorgesehen ist. Hingegen erweisen sich nichtrostende und säurebeständige Stähle mit einem Borgehalt von mehr als 0,01 Gew.-% als ungeeignet, um sicher rissfreie Schichten mit entsprechender Korrosionsschutzwirkung herstellen zu können. Zudem führen Borgehalte von mehr als 0,01 Gew.-% zu einer deutlich erhöhten Sensitivität mit Bezug auf Graphitlamellen an der Oberfläche von Graugussbauteilen, die Fehlstellen in der Korrosionsschutzschicht hervorrufen können. Mit dem Hochgeschwindigkeits-Laserauftragschweißen kann eine dünne, duktile, metallurgisch angebundene Korrosionsschutzschicht hergestellt werden. Bei dem Hochgeschwindigkeits-Laserauftragschweißen können Schichten mit einem hohen Überlappungsgrad (> 50 %, bevorzugt > 75%) und vernachlässigbarer Welligkeit sowie geringen Schichtdickenschwankungen hergestellt werden. Mit dem Hochgeschwindigkeits-Laserauftragschweißen können vollständig flächendeckende und rissfreie Schichten von 100 µm bis 300 µm Dicke einlagig oder auch mehrlagig hergestellt werden, wobei zudem lediglich Standardabweichungen von weniger als 20 µm realisiert werden können.

Als besonders vorteilhaft für das Herstellen der Korrosionsschutzschicht mittels Hochgeschwindigkeits-Laserauftragschweißen mit hoher Flächenrate erweist sich der Einsatz quasi-koaxialer Mehrstrahl-Pulverdüsen, insbesondere von Pulverdüsen mit 6 Pulverstrahlen. Im Gegensatz zum Einsatz von Ringspaltdüsen ist eine effektive Wasserkühlung des Pulverdüsenkörpers bis an die Spitze der Düse möglich, so dass besonders hohe Laserleistungen, d.h. mehr als 2 kW, bevorzugt mehr als 4 kW, besonders bevorzugt mehr als 6 kW, auch über lange Prozesszeiten, bspw. im Dreischichtbetrieb, eingesetzt werden können, weil die Düse reflektierte Anteile der Laserstrahlung effektiv abführen kann. Der Einsatz von Pulverdüsen mit 6 Pulverstrahlen eliminiert die Sensitivität des Laserauftragprozesses in Bezug auf die Positionierung der Bohrungen der Pulverdüse in Umfangrichtung bezogen auf den Verfahrweg der Pulverdüse über der zu beschichtenden Scheibe. Weiterhin erweist sich der Einsatz von Pulverdüsen, die einen besonders großen Arbeitsabstand ermöglichen, d.h. bevorzugt mehr als 20 mm Arbeitsabstand, besonders bevorzugt 25 mm Arbeitsabstand, als vorteilhaft, weil mit zunehmendem Arbeitsabstand die Einwirkung reflektierter Anteile der Laserstrahlung abnimmt. Darüber hinaus bewirkt der Einsatz quasi-koaxialer Mehrstrahl-Pulverdüsen mit Inserts aus Glasröhrchen eine besonders hohe Langzeit-Prozessstabilität, weil die glatte Innenoberfläche der Glasröhrchen die Pulverstrahlen effektiv über lange Distanzen hinter der Austrittsfläche zu bündeln vermag und der Oberflächenzustand aufgrund der Härte des Glases deutlich länger erhalten bleibt als dies bei Pulverdüsen oder Pulverdüseninserts aus Kupfer oder Kupferbasis-Legierungen der Fall ist. Schließlich erweisen sich quasi-koaxiale Mehrstrahl-Pulverdüsen mit um den Bohrungskreis der Pulverinjektoren koaxial herum angeordneten Bohrungen für die Zufuhr eines Hüllgases als vorteilhaft, weil eine solche Strömung zu einer Bündelung des vereinigten Pulverstrahls und zu einer verbesserten Inertisierung der Prozesszone, in der das Schmelzbad gebildet wird, erstarrt und abkühlt, beiträgt.

Der Grundkörper der Bremsscheiben kann ringförmig ausgebildet sein. Der Grundkörper kann unter Verwendung eines Sandgussverfahrens hergestellt werden. An der axialen Reibseite des Grundkörpers können Graphitlamellen angeordnet sein. Die Korrosionsschutzschicht kann bereichsweise oder vollflächig auf die axiale Reibseite aufgebracht sein. Die Verschleißschutzschicht kann bereichsweise oder vollflächig auf die Korrosionsschutzschicht aufgebracht sein. Der Grundkörper kann auch zwei axiale Reibseiten aufweisen, die sich axial einander gegenüberliegen und entsprechend beschichtet sind.

Das Landfahrzeug kann ein Kraftfahrzeug, insbesondere ein Personenkraftwagen oder ein Nutzfahrzeug sein.

Grundsätzlich können beispielsweise kostengünstige harte Eisenbasis-Legierungen als Verschleißschutzschicht auf die Korrosionsschutzschicht aufgetragen werden. Allerdings neigen solche Eisenbasis-Legierungen bei ihrer Verwendung in einem Hochgeschwindigkeits-Laserauftragsverfahren bzw. bei für ein solches Verfahren typischen Oberflächengeschwindigkeiten von mehr als 10 m/min zur Ausbildung von Rissen in der aufgetragenen Schicht. Aus einem Auftragen von Schichten mittels eines konventionellen (langsameren) Laserauftragschweißen resultieren dagegen in der Regel unwirtschaftlich lange Beschichtungszeiten und ein hoher Verzug an den Bremsscheiben, der extrem hohe Kosten für die Nachbearbeitung durch Schleifen verursacht.

Die mittels Laserauftragschweißen aufgetragene duktile Korrosionsschutzschicht aus einem nichtrostenden und säurebeständigen Stahl ist metallurgisch an die Oberfläche bzw. an die Scheibenoberfläche des Grauguss-Grundkörpers und somit optimal angebunden, was eine optimale Grundlage für das Auftragen der verschleißbeständigen Deckschicht bzw. Verschleißschutzschicht ist, die entweder mittels Laserauftragschweißen oder durch ein thermisches Spritzverfahren aufgebracht werden kann. Die Duktilität der Korrosionsschutzschicht bewirkt das Stoppen von Rissen, die im Zuge der extremen Thermowechselbeanspruchung beim Bremsen in der Verschleißschutzschicht entstehen können, und garantiert damit das Vermeiden von Unterkorrosion als Folge von Rissbildung im Zuge kontinuierlicher Nutzung von Bremsscheiben.

Gemäß Ausgestaltung weist die Korrosionsschutzschicht auf Eisenbasis einen Chromgehalt zwischen 10,5 Gew.-% und 30 Gew.-%, einen nicht vom Schutzumfang der Erfindung umfassten Nickelgehalt von maximal 20 Gew.-%, einen Molybdängehalt von maximal 8 Gew.-%, einen nicht vom Schutzumfang der Erfindung umfassten Kupfergehalt von maximal 3 Gew.-%, einen Kohlenstoffgehalt von maximal 0,05 Gew.-% und in jedem Fall einen Borgehalt von max. 0,01 Gew.-% auf. Beispiele für Werkstoffe können Stähle mit den Werkstoffnummern 1.4404 oder 1.4462 sein, wobei in der Spezifikation der chemischen Zusammensetzung jeweils ein maximaler Borgehalt von 0,01 Gew.-% zu ergänzen ist.

Erfindungsgemäß weist die Korrosionsschutzschicht auf Eisenbasis einen maximalen Kupfergehalt und/oder einen maximalen Kobaltgehalt und/oder einen maximalen Wolframgehalt von jeweils 0,1 Gew.-% auf. Solche Stähle als Korrosionsschutzschicht bieten weiterhin den Vorteil, dass in gegebenenfalls doch noch anfallendem Abrieb der Korrosionsschutzschicht maximal vernachlässigbar geringe Gehalte der Elemente Kupfer, Kobalt und/oder Wolfram enthalten sind, denen ein besonders hohes Gesundheitsgefährdungspotenzial beigemessen wird.

Erfindungsgemäß weist die Korrosionsschutzschicht auf Eisenbasis einen Nickelgehalt von weniger als 0,1 Gew.-% auf. Solche nickelfreien (Ni-Gehalte < 0,1 Gew.- %) Stähle als Korrosionsschutzschicht bieten weiterhin den Vorteil, dass in gegebenenfalls doch noch anfallendem Abrieb der Korrosionsschutzschicht maximal vernachlässigbar geringe Gehalte von Nickel enthalten sind, dem auch ein besonders hohes Gesundheitsgefährdungspotenzial beigemessen wird. Beispiele für bevorzugte Stähle sind Werkstoffe mit den Werkstoffnummern 1.4512, 1.4521 oder 1.4522, wobei in der Spezifikation der chemischen Zusammensetzung jeweils ein maximaler Borgehalt von 0,01 Gew.-% zu ergänzen ist.

Erfindungsgemäß ist vorgesehen, dass die Korrosionsschutzschicht eine Karbidverstärkung aufweist. Vorzugsweise weist die Korrosionsschutzschicht eine Karbidverstärkung aus Karbiden starker Karbidbildner auf, die ein vollständiges Ausscheiden aus der Eisenbasis-Schmelze ermöglichen. Die Karbidverstärkung kann beispielsweise durch den Zusatz von Niobcarbid oder Vanadiumcarbid realisiert sein. Die Karbidverstärkung bzw. das dazu verwendete Karbid kann einem Laserauftragsschweißprozess über eine zweite Pulverlinie zugeführt werden, so dass durch Kontrolle der Förderraten von Stahlpulver über eine erste Pulverlinie und karbidischem Pulver über die zweite Pulverlinie gradierte Schichten aufgebaut werden können. Es kann also Niobcarbid oder Vanadiumcarbid als Verstärkung in (gradierten) Verbundschichten mit nichtrostendem und säurebeständigem Stahl mit maximalen Borgehalten von 0,01 Gew.-% als metallische Matrix verwendet werden.

Nach einer weiteren vorteilhaften Ausgestaltung ist die Verschleißschutzschicht aus einem SiC-Werkstoff mit wenigstens einem oxidischen oder metallischen Binder hergestellt. Der SiC-Werkstoff kann beispielsweise unter Verwendung eines thermischen Spritzverfahrens, bevorzugt Hochgeschwindigkeitsflammspritzen (HVOF), besonders bevorzugt HVOF mit Flüssigbrennstoff, auf die axiale Reibseite des Grundkörpers aufgebracht werden. Ein reines SiC-Beschichtungspulver würde sich jedoch bei einem thermischen Beschichtungsverfahren zersetzen, weshalb etwa 1 µm große Siliciumcarbide mit einer Hülle aus entweder Oxiden oder Metallen umgeben werden können. Dieses Hüll-Material nimmt beispielsweise die Wärme aus einer HVOF-Flamme auf und erweicht, so dass es beim Aufprall auf der Oberfläche zu einer dichten Beschichtung aus SiC-Partikeln mit einer Umhüllung aus Oxiden oder Metallen kommt. SiC ist bekannt für seine sehr hohe Abrasionsbeständigkeit. Weiterhin hat SiC eine hohe Wärmeleitfähigkeit, was es für den Einsatz als Verschleißschutzschicht auf Bremsscheiben qualifiziert. In Verschleißtests stellte sich heraus, dass eine derart beschichtete Bremsscheibe keinerlei Scheibenverschleiß zeigt. Das Verschleißergebnis ist umso erstaunlicher, da Härtemessungen nur moderate Härtewerte erkennen lassen mit einem Mittelwert von knapp über 600 HV0,3. Vermutlich werden die nur 1 µm großen SiC-Partikel bei der Härteprüfung kaum erfasst und es wird daher eher die Härte der (hier oxidischen) Umhüllung gemessen. SiC an sich weist eine Härte im Bereich von oberhalb 2.200 HV0,3 auf.

Gemäß einer weiteren vorteilhaften Ausgestaltung ist die Verschleißschutzschicht aus einer Eisenbasis-Legierung mit einer Vanadiumcarbid-Verstärkung oder einer Niobcarbid-Verstärkung oder einer Borcarbid-Verstärkung oder einer Chromcarbid-Verstärkung hergestellt. Hierbei kann die Verschleißschutzschicht aus einer harten Eisenbasis-Legierungen mit Vanadiumcarbid als Verstärkungskomponente in einer durch Legieren mit Chrom korrosionsfesten, im Wesentlichen ferritischen Matrix hergestellt werden. Der Vanadiumgehalt eines Spritzzusatzwerkstoffs kann mehr als 6 Gew.-% betragen, bevorzugt 17 Gew.-%. Derartige harte Eisenbasis-Legierungen erzielen eine hohe Härte (im Fall von 17 Gew.-% Vanadium - FeCrV17 - etwa 850 HV0,3) nicht durch eine harte Matrix, sondern durch extrem harte Vanadiumcarbide als Verstärkungskomponente. Weil die Matrix aus einem duktilen Eisenmischkristall besteht, weisen die betreffenden Verbundwerkstoffe eine außergewöhnliche hohe Beständigkeit gegen Schlagbeanspruchung und Kantenstabilität auf und werden vielfach zum Ausbilden von Schneid- und Messerkanten eingesetzt. Grundsätzlich entwickelt Niob als Legierungselement in harten Eisen-Basislegierungen eine zu Vanadium vergleichbare Wirkung bezüglich des Ausscheidungsverhaltens von Karbiden. Daher werden alternativ zu hoch Vanadium-haltigen harten Eisen-Basislegierungen solche mit hohen Niobgehalten von mehr als 8 Gew.-%, bevorzugt mehr als 15 Gew.-%, vorgeschlagen. FeCrBC-Hartlegierungen mit Chromgehalten von mindestens 17 Gew.-% und Borgehalten von mindestens 2 Gew.-%, bevorzugt 25 Gew.-% Chrom und 5 Gew.-% Bor, erzielen eine Härte von ca. 900 HV0,3. Die Härte dieser Legierungsfamilie beruht auf der Bildung von Komplexboriden und einer extrem feinen (häufig sogar röntgenamorphen) Mikrostruktur. Die extrem feine Kristallstruktur ist auch die Basis für eine hervorragende Beständigkeit gegen Schlagbeanspruchung. Chromgehalte von mindestens 17 Gew.-% (bis hin zu 35 Gew.-%) bewirken eine hohe Korrosionsbeständigkeit. Alternativ werden FeCrC-Metall-Keramik-Verbundwerkstoffe, bestehend aus einer metallischen Matrix auf Basis von Eisen mit Chromgehalten von mindestens 12 Gew.-%, bevorzugt 20 Gew.-%, bis 30 Gew.-%, um eine gute Korrosionsfestigkeit abzusichern, und Chromkarbiden (bevorzugt Cr₃C₂) mit einem Anteil von mindestens 50 Gew.-%, bevorzugt 75 Gew.-% bis 80 Gew.-%, zum Erzielen einer hohen Schichthärte (etwa 900 HV0,3 bis 1.000 HV0,3) und Abriebbeständigkeit, vorgeschlagen. Dabei können durch Agglomerieren (Sprühtrocknen) und Sintern hergestellte Verbundpulver zum Einsatz kommen, um einerseits die besonders harten Chromkarbide Cr₃C₂ - und nicht aus der Schmelzphase gebildete chromreiche Mischkarbide, die in konventionellen schmelzmetallurgisch hergestellten harten Eisen-Basislegierungen versprödend wirken - in den Schichten vorliegen zu haben und um die metallische Matrix nicht durch Anreichern mit Kohlenstoff zu verspröden, wodurch die Korrosionsbeständigkeit und die Beständigkeit gegen Schlagbeanspruchung abgesenkt werden würde. Grundsätzlich sind auch andere harte Eisenbasis-Legierungen einsetzbar. Die oben aufgeführten Verschleißschutzwerkstoffe bieten allerdings den Vorteil, dass gegebenenfalls doch noch anfallender Abrieb der Verschleißschutzschicht der Bremsscheibe keine Elemente enthält, denen ein besonders hohes Gesundheitsgefährdungspotenzial beigemessen wird, wie beispielsweise Nickel, Kobalt, Kupfer und Wolfram. Die oben beschriebenen Verschleißschutzschichten bestehen somit aus kostengünstigen Materialien. Die betreffenden Verschleißschutzschichten werden über thermische Spritzverfahren, bevorzugt Hochgeschwindigkeitsflammspritzen (HVOF), besonders bevorzugt HVOF mit Flüssigbrennstoff, hergestellt. Der Einsatz von mit Flüssigbrennstoff betriebenen HVOF-Brennern mit 4 Injektoren ermöglicht im Vergleich zu Brennern mit bspw. nur 2 Injektoren deutlich höhere Pulverförderraten und entsprechend höhere Depositionsraten. Daraus resultieren minimierte Prozesszeiten und somit minimierte Verbräuche an Brennstoff und Sauerstoff sowie eine maximale Produktivität.

In Verschleißtests hat sich gezeigt, dass eine HVOF-Beschichtung aus FeCrV17-Material zu einer ausgezeichneten Verschleißpaarung mit konventionellen Bremsbelägen führt. So ergab sich kein Verschleiß an der Bremsscheibe und kein erhöhter Verschleiß an dem Bremsbelagmaterial im Vergleich zur Prüfung unbeschichteter Bremsscheiben. Eine Schichtdicke von 200 µm im fertig bearbeiteten Zustand erweist sich als ausreichend.

Die obige Aufgabe wird des Weiteren durch ein Verfahren mit den Merkmalen des Anspruchs 4 gelöst, bei dem die Korrosionsschutzschicht unter Verwendung eines Laserauftragsverfahrens hergestellt wird, bei dem ein nichtrostender und säurebeständiger Stahl mit einem Borgehalt von max. 0,01 Gew.-%, einem maximalen Nickelgehalt von 0,1 Gew.-%, einem maximalen Kupfergehalt und/oder einem maximalen Kobaltgehalt und/oder einem maximalen Wolframgehalt von 0,1 Gew.-% mit einer Oberflächengeschwindigkeit von mehr als 10 m/min auf die axiale Reibseite aufgetragen wird.

Mit dem Verfahren sind die oben mit Bezug auf die Bremsscheibe genannten Vorteile entsprechend verbunden. Insbesondere kann die Bremsscheibe gemäß einer der oben genannten Ausgestaltungen oder einer Kombination von wenigstens zwei dieser Ausgestaltungen miteinander unter Verwendung des erfindungsgemäßen Verfahrens hergestellt werden.

Der Grundkörper kann unter Verwendung eines Sandgussverfahrens hergestellt werden. Die Verschleißschutzschicht kann unter Verwendung eines Laserauftragsverfahrens oder eines thermischen Beschichtungsverfahrens auf die Korrosionsschutzschicht aufgetragen werden.

Gemäß einer vorteilhaften Ausgestaltung wird die axiale Reibseite vor dem Aufbringen der Korrosionsschutzschicht einem spanabhebenden Drehen oder Fräsen unterworfen. Insbesondere kann die axiale Reibseite unter Verwendung eines trockenen spanabhebenden Drehens oder Fräsens bearbeitet und hierdurch geglättet werden.

Eine weitere vorteilhafte Ausgestaltung sieht vor, dass eine dem Grundkörper abgewandte Oberfläche der Korrosionsschutzschicht vor dem Aufbringen der Verschleißschutzschicht geglättet wird. Beispielsweise kann die Oberfläche der Korrosionsschutzschicht durch ein spanabhebendes Drehen oder Fräsen oder durch Laserpolieren zum Einstellen einer besonders glatten Oberfläche der Korrosionsschutzschicht geglättet werden.

Nach einer weiteren vorteilhaften Ausgestaltung wird eine der Korrosionsschutzschicht abgewandte Oberfläche der Verschleißschutzschicht geglättet. Beispielsweise kann die Oberfläche der Verschleißschutzschicht durch Schleifen geglättet werden.

Gemäß einer weiteren vorteilhaften Ausgestaltung wird die Verschleißschutzschicht unter Verwendung eines Laserauftragsverfahrens oder eines Hochgeschwindigkeitsflammspritzverfahrens auf die Korrosionsschutzschicht aufgetragen.

Eine weitere vorteilhafte Ausgestaltung sieht vor, dass bei dem Laserauftragsverfahren ein Pulver eines nichtrostenden und säurebeständigen Stahls mit einem Borgehalt von max. 0,01 Gew.-% und gleichzeitig ein karbidisches Pulver kontinuierlich in einen Laserstrahl eingeführt werden.

Obwohl bisher lediglich von Bremsscheiben die Rede war, liegt es im Sinne der Erfindung auch Trommelbremsen mit der erfindungsgemäßen Beschichtung zu versehen. Von dem Erfindungsgedanken umfasst ist also auch das Verfahren zum Herstellen von Trommelbremsen mit der erfindungsgemäßen Beschichtung (Korrosionsschutzschicht/Verschleißschutzschicht).

Weitere vorteilhafte Ausgestaltungen der Erfindung sind in den Unteransprüchen und der folgenden Figurenbeschreibung offenbart. Es zeigen
- Fig. 1: einen schematischen Axialschnitt eines Ausführungsbeispiels für eine erfindungsgemäße Bremsscheibe, und
- Fig. 2: ein Ablaufdiagramm eines Ausführungsbeispiels für ein erfindungsgemäßes Verfahren.

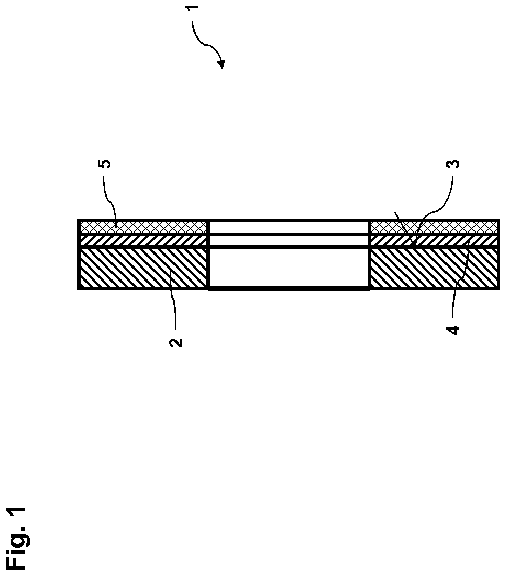

Fig. 1 zeigt einen schematischen Axialschnitt eines Ausführungsbeispiels für eine erfindungsgemäße Bremsscheibe 1 für eine nicht gezeigte Radbremse eines nicht gezeigten Landfahrzeugs.

Die ringförmig ausgebildete Bremsscheibe 1 weist einen aus Grauguss gebildeten, ringförmig ausgebildeten Grundkörper 2 mit einer axialen Reibseite 3, eine auf die axiale Reibseite 3 aufgebrachte, ringförmig ausgebildete Korrosionsschutzschicht 4 und eine auf die Korrosionsschutzschicht 4 aufgebrachte, ringförmig ausgebildete Verschleißschutzschicht 5 aus einem nichtrostenden und säurebeständigen Stahl mit einem Borgehalt von max. 0,01 Gew.-% auf.

Die Korrosionsschutzschicht 4 auf Eisenbasis weist einen Chromgehalt zwischen 12 Gew.-% und 30 Gew.-%, einen von dem Schutzumfang der Erfindung nicht umfassten Nickelgehalt von maximal 20 Gew.-%, einen Molybdängehalt von maximal 8 Gew.-%, einen von dem Schutzumfang der Erfindung nicht umfassten Kupfergehalt von maximal 3 Gew.-%, einen Kohlenstoffgehalt von maximal 0,05 Gew.-% und in jedem Fall einen Borgehalt von maximal 0,01 Gew.-% auf. Zudem weist die Korrosionsschutzschicht 4 eine nicht gezeigte Karbidverstärkung auf.

Die Verschleißschutzschicht 5 kann aus einem SiC-Werkstoff mit wenigstens einem oxidischen oder metallischen Binder hergestellt sein. Alternativ kann die Verschleißschutzschicht aus einer Eisen-Basislegierung mit einer Vanadiumcarbid-Verstärkung oder einer Niobcarbid-Verstärkung oder einer Borcarbid-Verstärkung oder einer Chromcarbid-Verstärkung hergestellt sein.

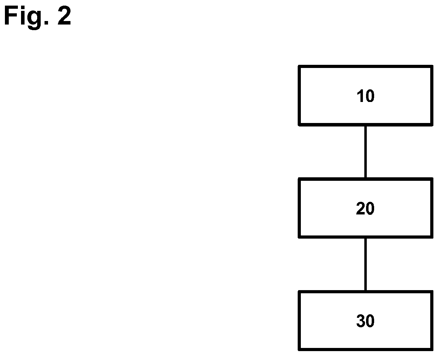

Fig. 2 zeigt ein Ablaufdiagramm eines Ausführungsbeispiels für ein erfindungsgemäßes Verfahren zum Herstellen einer Bremsscheibe für eine Radbremse eines Landfahrzeugs. Die fertige Bremsscheibe kann entsprechend Fig. 1 ausgebildet sein.

In Verfahrensschritt 10 wird ein Grundkörper aus Grauguss hergestellt, der wenigstens eine axiale Reibseite aufweist. Hierzu kann ein Sandgussverfahren eingesetzt werden.

In Verfahrensschritt 20 wird auf die axiale Reibseite des Grundkörpers eine Korrosionsschutzschicht aufgebracht. Dabei wird die Korrosionsschutzschicht unter Verwendung eines Laserauftragsverfahrens hergestellt, bei dem ein nichtrostender und säurebeständiger Stahl mit einem Borgehalt von max. 0,01 Gew.-% mit einer Oberflächengeschwindigkeit von mehr als 10 m/min auf die axiale Reibseite aufgetragen wird. Die axiale Reibseite kann vor dem Aufbringen der Korrosionsschutzschicht einem spanabhebenden Drehen unterworfen werden. Bei dem Laserauftragsverfahren können ein Stahlpulver und gleichzeitig ein karbidisches Pulver kontinuierlich in einen Laserstrahl eingeführt werden.

In Schritt 30 wird eine Verschleißschutzschicht auf die Korrosionsschutzschicht aufgebracht. Dabei kann die Verschleißschutzschicht unter Verwendung eines Laserauftragsverfahrens oder eines Hochgeschwindigkeitsflammspritzverfahrens auf die Korrosionsschutzschicht aufgetragen werden. Eine dem Grundkörper abgewandte Oberfläche der Korrosionsschutzschicht kann vor dem Aufbringen der Verschleißschutzschicht geglättet werden. Eine der Korrosionsschutzschicht abgewandte Oberfläche der Verschleißschutzschicht kann abschließend geglättet werden.

### Bezugszeichenliste:

- 1: Bremsscheibe
- 2: Grundkörper
- 3: Reibseite von 2
- 4: Korrosionsschutzschicht
- 5: Verschleißschutzschicht
- 10: Verfahrensschritt (Herstellen von 2)
- 20: Verfahrensschritt (Aufbringen von 4)
- 30: Verfahrensschritt (Aufbringen von 5)

## Patentansprüche

1. Bremsscheibe (1) für eine Radbremse eines Landfahrzeugs, aufweisend einen aus Grauguss gebildeten Grundkörper (2) mit wenigstens einer axialen Reibseite (3), wenigstens eine auf die axiale Reibseite (3) aufgebrachte Korrosionsschutzschicht (4) und wenigstens eine auf die Korrosionsschutzschicht (4) aufgebrachte Verschleißschutzschicht (5),
**dadurch gekennzeichnet, dass**
die Korrosionsschutzschicht (4) auf Eisenbasis aus einem nichtrostenden und säurebeständigen Stahl mit einem Borgehalt von max. 0,01 Gew.-%, einem maximalen Nickelgehalt von 0,1 Gew.-%, einem maximalen Kupfergehalt und/oder einem maximalen Kobaltgehalt und/oder einem maximalen Wolframgehalt von 0,1 Gew.-% - hergestellt ist, und eine Karbidverstärkung aufweist.

2. Bremsscheibe (1) nach Anspruch 1,
**dadurch gekennzeichnet, dass**
die Verschleißschutzschicht (5) aus einem SiC-Werkstoff mit wenigstens einem oxidischen oder metallischen Binder hergestellt ist.

3. Bremsscheibe (1) nach Anspruch 1 oder 2,
**dadurch gekennzeichnet, dass**
die Verschleißschutzschicht (5) aus einer Eisenbasis-Legierung mit einer Vanadiumcarbid-Verstärkung oder einer Niobcarbid-Verstärkung oder einer Borcarbid-Verstärkung oder einer Chromcarbid-Verstärkung hergestellt ist.

4. Verfahren zum Herstellen einer Bremsscheibe (1) nach einem der vorhergehenden Ansprüche für eine Radbremse eines Landfahrzeugs, wobei ein Grundkörper (2) aus Grauguss hergestellt wird, der wenigstens eine axiale Reibseite (3) aufweist, auf die axiale Reibseite (3) wenigstens eine Korrosionsschutzschicht (4) aufgebracht wird und auf die Korrosionsschutzschicht (4) wenigstens eine Verschleißschutzschicht (5) aufgebracht wird,
**dadurch gekennzeichnet, dass**
die Korrosionsschutzschicht (4) unter Verwendung eines Laserauftragsverfahrens hergestellt wird, bei dem ein nichtrostender und säurebeständiger Stahl mit einem Borgehalt von max. 0,01 Gew.-%, einem maximalen Nickelgehalt von 0,1 Gew.-%, einem maximalen Kupfergehalt und/oder einem maximalen Kobaltgehalt und/oder einem maximalen Wolframgehalt von 0,1 Gew.-% mit einer Oberflächengeschwindigkeit von mehr als 10 m/min auf die axiale Reibseite (3) aufgetragen wird.

5. Verfahren nach Anspruch 4,
**dadurch gekennzeichnet, dass**
die axiale Reibseite (3) vor dem Aufbringen der Korrosionsschutzschicht (4) einem spanabhebenden Drehen unterworfen wird.

6. Verfahren nach Anspruch 4 oder 5,
**dadurch gekennzeichnet, dass**
eine dem Grundkörper (2) abgewandte Oberfläche der Korrosionsschutzschicht (4) vor dem Aufbringen der Verschleißschutzschicht (5) geglättet wird.

7. Verfahren nach einem der Ansprüche 4 bis 6,
**dadurch gekennzeichnet, dass**
eine der Korrosionsschutzschicht (4) abgewandte Oberfläche der Verschleißschutzschicht (5) geglättet wird.

8. Verfahren nach einem der Ansprüche 4 bis 7,
**dadurch gekennzeichnet, dass**
die Verschleißschutzschicht (5) unter Verwendung eines Laserauftragsverfahrens oder eines Hochgeschwindigkeitsflammspritzverfahrens auf die Korrosionsschutzschicht (4) aufgetragen wird.

9. Verfahren nach Anspruch 8,
**dadurch gekennzeichnet, dass**
bei dem Laserauftragsverfahren ein Pulver eines nichtrostenden und säurebeständigen Stahls mit einem Borgehalt von max. 0,01 Gew.-%, einem maximalen Nickelgehalt von 0,1 Gew.-%, einem maximalen Kupfergehalt und/oder einem maximalen Kobaltgehalt und/oder einem maximalen Wolframgehalt von 0,1 Gew.-% und gleichzeitig ein karbidisches Pulver kontinuierlich in einen Laserstrahl eingeführt werden.

10. Verfahren nach einem der Ansprüche 4 bis 9,
**dadurch gekennzeichnet, dass**
bei dem Laserauftragsverfahren eine quasi-koaxiale Mehrstrahl-Pulverdüse mit bevorzugt sechs Pulverstrahlen, einem großen, bevorzugt 25 mm, Auslegungs-Arbeitsabstand, mit Pulverinjektoreinsätzen mit glatter und harter Innenoberfläche, besonders bevorzugt mit Glas-Pulverinjektoreinsätzen, und einem Hüllgasstrom um die Pulverstrahlen herum verwendet wird.

11. Verfahren nach einem der Ansprüche 4 bis 10,
**dadurch gekennzeichnet, dass**
bei dem Hochgeschwindigkeitsflammspritzen von Verschleißschutzschichten ein mit Flüssigbrennstoff betriebener HVOF-Brenner mit vier Pulverinjektoren eingesetzt wird.

## Claims

1. Brake disk (1) for a wheel brake of a land vehicle, having a main body (2), formed from grey cast iron, having at least one axial friction side (3), at least one anti-corrosion layer (4) applied to the axial friction side (3), and at least one anti-abrasion layer (5) applied to the anti-corrosion layer (4),
**characterized in that**
the anti-corrosion layer (4) based on iron is produced from a non-rusting and acid-resistant steel having a boron content of at most 0.01% by weight, a maximum nickel content of 0.1% by weight, a maximum copper content and/or a maximum cobalt content and/or a maximum tungsten content of 0.1% by weight, and has a carbide reinforcement.

2. Brake disk (1) according to Claim 1,
**characterized in that**
the anti-abrasion layer (5) is produced from an SiC material with at least one oxidic or metallic binder.

3. Brake disk (1) according to Claim 1 or 2,
**characterized in that**
the anti-abrasion layer (5) is produced from an iron-based alloy having a vanadium carbide reinforcement or a niobium carbide reinforcement or a boron carbide reinforcement or a chromium carbide reinforcement.

4. Method for producing a brake disk (1) according to any of the preceding claims for a wheel brake of a land vehicle, wherein a main body (2) is produced from grey cast iron, the main body having at least one axial friction side (3), at least one anti-corrosion layer (4) is applied to the axial friction side (3), and at least one anti-abrasion layer (5) is applied to the anti-corrosion layer (4),
**characterized in that**
the anti-corrosion layer (4) is produced using a laser deposition method, in which a non-rusting and acid-resistant steel having a boron content of at most 0.01% by weight, a maximum nickel content of 0.1% by weight, a maximum copper content and/or a maximum cobalt content and/or a maximum tungsten content of 0.1% by weight is applied to the axial friction side (3) at a surface speed of more than 10 m/min.

5. Method according to Claim 4,
**characterized in that**
the axial friction side (3) is subjected to a machining operation involving turning before the application of the anti-corrosion layer (4).

6. Method according to Claim 4 or 5,
**characterized in that**
a surface of the anti-corrosion layer (4) which faces away from the main body (2) is smoothed before the application of the anti-abrasion layer (5).

7. Method according to any one of Claims 4 to 6,
**characterized in that**
a surface of the anti-abrasion layer (5) which faces away from the anti-corrosion layer (4) is smoothed.

8. Method according to any one of Claims 4 to 7,
**characterized in that**
the anti-abrasion layer (5) is applied to the anti-corrosion layer (4) using a laser deposition method or a high-velocity flame spraying method.

9. Method according to Claim 8,
**characterized in that**
a powder of a non-rusting and acid-resistant steel having a boron content of at most 0.01% by weight, a maximum nickel content of 0.1% by weight, a maximum copper content and/or a maximum cobalt content and/or a maximum tungsten content of 0.1% by weight and, at the same time, a carbide powder are introduced continuously into a laser beam in the laser deposition method.

10. Method according to any one of Claims 4 to 9,
**characterized in that**
a quasi-coaxial multi-jet powder nozzle, preferably having six powder jets, a large design working clearance, preferably 25 mm, having powder injector inserts with a smooth and hard internal surface, particularly preferably having glass powder injector inserts, and a shielding gas stream around the powder jets is used in the laser deposition method.

11. Method according to any one of Claims 4 to 10,
**characterized in that**
an HVOF burner having four powder injectors, operated with liquid fuel, is used in the high-velocity flame spraying of anti-abrasion layers.

## Revendications

1. Disque de frein (1) pour un frein de roue d'un véhicule terrestre, présentant un corps de base (2) formé de fonte grise comportant au moins une face de frottement axiale (3), au moins une couche de protection contre la corrosion (4) appliquée sur la face de frottement axiale (3) et au moins une couche de protection contre l'usure (5) appliquée sur la couche de protection contre la corrosion (4), **caractérisé en ce que** la couche de protection contre la corrosion (4) est fabriquée à base de fer à partir d'un acier inoxydable et résistant à l'acide possédant une teneur en bore de 0,01 % en poids maximum, une teneur en nickel de 0,1 % en poids maximum, une teneur en cuivre et/ou une teneur en cobalt et/ou une teneur en tungstène de 0,1 % en poids maximum, et présente un renforcement de carbure.

2. Disque de frein (1) selon la revendication 1, **caractérisé en ce que** la couche de protection contre l'usure (5) est fabriquée à partir d'un matériau de SiC comportant au moins un liant oxydique ou métallique.

3. Disque de frein (1) selon la revendication 1 ou 2, **caractérisé en ce que** la couche de protection contre l'usure (5) est fabriquée à partir d'un alliage à base de fer comportant un renforcement de carbure de vanadium ou un renforcement de carbure de niobium ou un renforcement de carbure de bore ou un renforcement de carbure de chrome.

4. Procédé de fabrication d'un disque de frein (1) selon l'une quelconque des revendications précédentes pour un frein de roue d'un véhicule terrestre, un corps de base (2) composé de fonte grise étant fabriqué qui présente au moins une face de frottement axiale (3), au moins une couche de protection contre la corrosion (4) étant appliquée sur la face de frottement axiale (3) et au moins une couche de protection contre l'usure (5) étant appliquée sur la couche de protection contre la corrosion (4), **caractérisé en ce que** la couche de protection contre la corrosion (4) est fabriquée en utilisant un procédé de dépôt laser dans lequel un acier inoxydable et résistant à l'acide possédant une teneur en bore de 0,01 % en poids maximum, une teneur en nickel de 0,1 % en poids maximum, une teneur en cuivre et/ou une teneur en cobalt et/ou une teneur en tungstène de 0,1 % en poids maximum est appliqué sur la face de frottement axiale (3) avec une vitesse de surface de plus de 10 m/min.

5. Procédé selon la revendication 4, **caractérisé en ce que** la face de frottement axiale (3) est soumise, avant l'application de la couche de protection contre la corrosion (4), à un tournage avec enlèvement de copeaux.

6. Procédé selon la revendication 4 ou 5, **caractérisé en ce qu'**une surface de la couche de protection contre la corrosion (4) opposée au corps de base (2) est lissée avant l'application de la couche de protection contre l'usure (5).

7. Procédé selon l'une quelconque des revendications 4 à 6, **caractérisé en ce qu'**une surface de la couche de protection contre l'usure (5) opposée à la couche de protection contre la corrosion (4) est lissée.

8. Procédé selon l'une quelconque des revendications 4 à 7, **caractérisé en ce que** la couche de protection contre l'usure (5) est appliquée sur la couche de protection contre la corrosion (4) en utilisant un procédé de dépôt laser ou un procédé de projection à la flamme à haute vitesse.

9. Procédé selon la revendication 8, **caractérisé en ce que** dans le cas du procédé de dépôt laser, une poudre d'un acier inoxydable et résistant à l'acide possédant une teneur en bore de 0,01 % en poids maximum, une teneur en nickel de 0,1 % en poids maximum, une teneur en cuivre et/ou une teneur en cobalt et/ou une teneur en tungstène de 0,1 % en poids maximum et simultanément une poudre de carbure sont introduites de manière continue dans un faisceau laser.

10. Procédé selon l'une quelconque des revendications 4 à 9, **caractérisé en ce que** dans le cas du procédé de dépôt laser, une buse à poudre multijets quasi-coaxiale comportant préférablement six jets de poudre, une grande distance de travail de conception, préférablement de 25 mm, avec des inserts d'injecteur de poudre à surface intérieure lisse et dure, particulièrement préférablement avec des inserts d'injecteur de poudre en verre, et un flux de gaz de gainage autour des jets de poudre, est utilisée.

11. Procédé selon l'une quelconque des revendications 4 à 10, **caractérisé en ce que** dans le cas de la projection à la flamme à haute vitesse de couches de protection contre l'usure, un brûleur HVOF alimenté par un combustible liquide comportant quatre injecteurs de poudre est utilisé.
